# FASCICULE DE BREVET EUROPEEN

(11) **EP 3 084 932 B1**
(45) Date de publication et mention de la délivrance du brevet: **24.08.2022**
(21) Numéro de dépôt: 14821776.3
(22) Date de dépôt: 02.12.2014
(51) Int. Cl.: H02K 3/52

(54) **INTERCONNECTEUR POUR STATOR DE MACHINE ÉLECTRIQUE ET STATOR DE MACHINE ÉLECTRIQUE COMPORTANT UN TEL INTERCONNECTEUR**
VERBINDUNG FÜR EINEN STATOR EINER ELEKTRISCHEN MASCHINE SOWIE STATOR EINER ELEKTRISCHEN MASCHINE MIT SOLCH EINEM VERBINDER
INTERCONNECTOR FOR A STATOR OF AN ELECTRIC MACHINE AND STATOR OF AN ELECTRIC MACHINE COMPRISING SUCH AN INTERCONNECTOR

(30) Priorité: 20.12.2013 FR 1363337
(43) Date de publication de la demande: 26.10.2016
(73) Titulaire: Valeo Equipements Electriques Moteur, 94046 Créteil Cedex (FR)
(72) Inventeur: GERVAIS, Hugues, F-77186 Noisiel (FR); HANQUEZ, Michaël, F-94000 Creteil (FR)
(74) Mandataire: Novembre, Christophe Adelphe
(86) Numéro de dépôt international: PCT/FR2014/053119
(87) Numéro de publication internationale: WO 2015/092192

(56) Documents cités:
- WO-A1-97/26700
- DE-A1-102009 045 551
- DE-T5-112011 102 869
- JP-A- 2008 312 276

## Description

### Domaine de l'invention

La présente invention concerne un interconnecteur pour stator de machine électrique.

La présente invention concerne également un stator de machine électrique comportant un tel interconnecteur.

L'invention se rapporte au domaine des machines électrique telles que les moteurs électriques, les alternateurs ou les alternateurs réversibles appelés alterno-démarreur.

L'invention trouve une application dans le domaine des prolongateurs d'autonomie d'un véhicule électriques, appelés « Range extendeur » en Anglais. Ces prolongateurs d'autonomie comportent un moteur thermique de faible puissance entraînant un alternateur destiné, quand cela est nécessaire, à fournir de l'énergie électrique aux batteries d'alimentation du moteur électrique de traction du véhicule électrique.

L'invention peut également s'appliquer aux alternateurs, alterno-démarreur, moteurs électriques.

### Etat de la technique

Ainsi qu'on le sait une machine électrique tournante, telle qu'un alternateur de véhicule, un prolongateur d'autonomie d'un véhicule électrique ou un moteur électrique, comporte un carter portant à sa périphérie interne un stator et centralement, via des moyens de palier tels que des roulements à billes et/ou à aiguilles, un arbre solidaire d'un rotor monté à l'intérieur du stator.

Cette machine électrique comporte un induit et un inducteur.

Dans le cas d'un alternateur, par exemple de véhicule automobile, le stator pourra comporter un corps en forme de paquet de tôles qui porte un bobinage d'induit polyphasé, tandis que le rotor pourra comporter un bobinage inducteur ou des aimants.

Le bobinage polyphasé pourra comporter plusieurs phases, par exemple trois phases ou plus, reliées à un pont redresseur de tension, par exemple à diodes, ou un onduleur pour alimenter les consommateurs du véhicule automobile en courant continu et recharger la batterie du véhicule.

Le rotor inducteur de l'alternateur pourra être un rotor à griffes comprenant deux roues polaires à griffes avec interposition d'un noyau en une ou deux parties portant à isolation électrique un bobinage d'excitation dont les extrémités sont reliées électriquement chacune à une bague collectrice sur chacune desquelles frotte un balais Ces balais sont reliés à un régulateur de tension. Pour plus de précisions on se reportera par exemple aux documents FR 2 676 873 et FR 2 710 197.

En variante l'alternateur est réversible et comporte un onduleur, par exemple doté de transistors du type MOSFET comme décrit par exemple dans le document FR 2 745 444 auquel on se reportera, ce type d'alternateur étant appelé alterno-démarreur car il permet également de fonctionner en mode moteur électrique notamment pour démarrer le moteur thermique du véhicule.

En variante le rotor comporte des aimants permanents dans le cas d'un alternateur par exemple du type de celui décrit dans le document EP 0 803 962, d'un alterno-démarreur ou d'un moteur électrique à stator inducteur et onduleur, par exemple du type de celui décrit dans le document EP 0 831 580.

En variante le rotor est un rotor à pôles saillants et comporte plusieurs bobinages inducteurs comme décrit par exemple dans le document EP 1 362 407.

En variante le rotor comporte des bobinages inducteurs et des aimants permanents comme décrit dans ce document EP 1 362 407. Intercalés ente ses griffes.

En variante le rotor est un rotor à griffes avec des aimants permanents comme décrit par exemple dans le document FR 2 793 085. En variante le rotor est un rotor à aimants permanents seuls.

D'autres exemples d'une machine électrique comportant un interconnecteur à conducteur de forme annulaire et un stator extérieur sont donnés dans WO 97/26700 A, DE 10 2009 045551 A, DE 11 2011 102869 T5 et JP 2008 312276 A.

La machine électrique peut être dépourvue de balais et comporter à la place un alternateur d'excitation comportant un stator inducteur et un rotor induit relié par un pont redresseur de courant à un bobinage inducteur d'un alternateur ou d'un ralentisseur électromagnétique.

La machine électrique tournante pourra être refroidie à l'aide d'au moins un ventilateur placé à l'extérieur du carter ou à l'intérieur du carter comme dans le document FR 2 676 873 précité. En variante la machine pourra être refroidie par un liquide de refroidissement circulant dans un canal ménagé dans le carter comme décrit par exemple dans les documents FR 2 667 738 et FR 2 793 085.

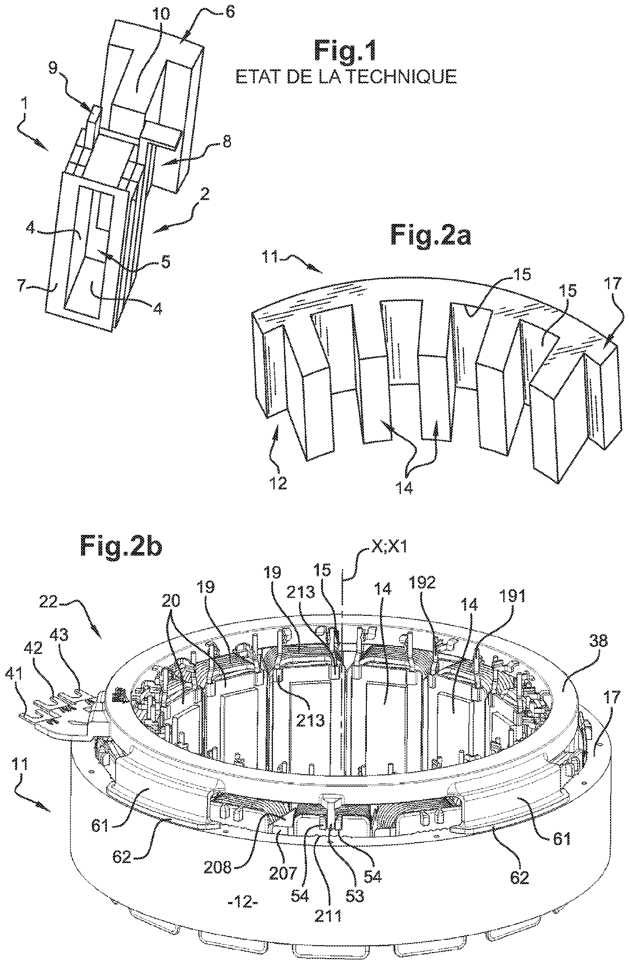

Comme visible à la figure 1 le stator pourra comporter un corps 6,10 sous la forme d'un paquet de tôles doté à sa périphérie externe d'une culasse 6 présentant à sa périphérie interne une pluralité de dents 10 dirigées radialement vers l'intérieur et délimitant entre elles des encoches.

Des bobines 9, à fil électriquement conducteur enroulé sur un isolant d'encoche 1, sont montées sur les dents 10. Le fil électrique d'une bobine 9 est par exemple en cuivre et/ou en Aluminium recouvert d'une isolation électrique telle que de l'émail. L'isolant 1 est électriquement isolant en étant par exemple en matière plastique. Cet isolant comporte un corps 2 doté de parois 4 délimitant un cadre 5 de forme globalement rectangulaire. Ce corps 2 comporte également un rebord avant 7 situé du côté intérieur de la machine et un rebord arrière 8 destiné à être positionné contre la périphérie interne de la culasse 6. Les parois 4 délimitent avec les rebords 7, 8 une gorge de montage d'une bobine 9. Ces bobines 9 sont reliées électriquement entre elles pour former les phases du bobinage du stator comme décrit par exemple dans le document FR 2 890 798 auquel on se reportera pour plus de précisions.

Ce type de stator pourra être équipé d'un interconnecteur pour connecter les phases de la machine électrique polyphasée comme décrit par exemple dans le brevet FR 2992495 A déposé le 20/12/2012.

Pour plus de précisions les figures 2 à 9 dudit brevet FR2992495 A seront reprises.

Ainsi les figures 2a et 2b montrent des vues en perspective respectivement d'un paquet de tôles de stator et d'un stator bobiné muni d'un interconnecteur selon cette demande.

La figure 3 est une vue de dessus de l'interconnecteur, tandis que la figure 4 représente une vue en perspective de l'un des conducteurs de forme annulaire par exemple circulaire de l'interconnecteur.

Les figures 5 et 6 sont des vues respectivement en perspective et en coupe transversale des conducteurs de forme annulaire par exemple circulaires qui peuvent être empilés et surmoulés dans l'interconnecteur.

La figure 7 représente une vue en perspective détaillée d'une patte d'interconnexion de l'interconnecteur.

La figure 8 est une vue de détail en perspective montrant un pion d'indexage de l'interconnecteur avec un système de guidage de l'isolant de bobine vue en perspective à la figure 9.

Dans cette demande FR2992495 le stator 11 présente un axe X et un corps 12, qui pourra être en forme d'un paquet de tôles en matière ferromagnétique s'étendant perpendiculairement à l'axe X. ces tôles pourront être maintenues ensembles par des rivets et ou des cordons de soudage. Dans la suite de la description les orientations axiale, radiale et transversale seront faites en référence à l'axe X.

Le corps 12 présente à sa périphérie externe une culasse 17, qui pourra être de forme cylindrique, et à sa périphérie interne une pluralité de dents 14 dirigées radialement vers l'intérieur en étant issues de la périphérie interne de la culasse 17. La culasse 17 pourra être emmanchée à force, par exemple par frettage, dans le carter de la machine électrique, tandis que la périphérie interne des dents délimitera un entrefer avec la périphérie externe du rotor de la machine électrique. Des encoches 15 ouvertes vers l'intérieur sont présentes entre deux dents 14 consécutives à bords parallèles. Les bords longitudinaux des dents sont dirigés axialement.

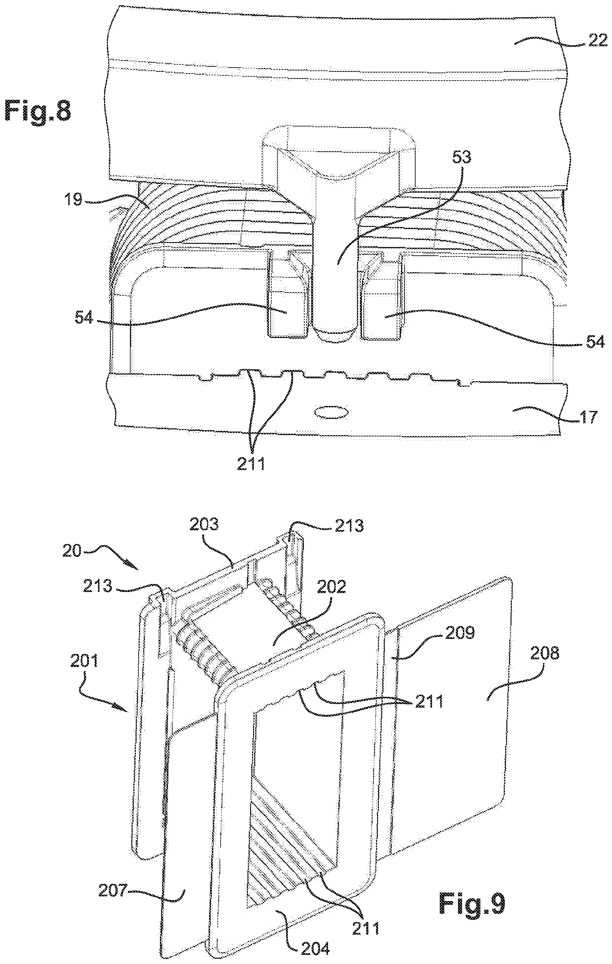

Comme visible à la figure 2a on monte des bobines préformées 19 sur les dents 14 de sorte que deux bobines préformées 19 sont montées dans une même encoche 15. Ces bobines 19 sont réalisées à partir d'un fil électriquement conducteur enroulé sur plusieurs tours. Le fil est par exemple en cuivre et /ou en Aluminium revêtu d'un isolant électrique tel que de l'émail. Ce fil est enroulé dans une gorge d'un isolant 20 réalisé dans une matière électriquement isolante par exemple en matière plastique telle que du PA 6.6, qui pourra être renforcé par des fibres par exemple des fibres de verre. Comme visible à la figure 9 cet isolant comporte un corps 201 formé par un cadre 202 délimité par un rebord avant 203 éloigné de la culasse 17 et un rebord arrière 204 destiné à venir en appui contre la périphérie interne de la culasse 17. Ce rebord arrière 204 est prolongé d'un côté par un talon 207 et de l'autre côté par une ailette 208 via une zone de pliage 209. L'ailette 208 pourra être plus épaisse que le talon 207 positionné de manière plaqué contre le fond d'une encoche 15, constitué par une portion de la périphérie interne de la culasse 17, pour diminuer la chute de tension entre la bobine 19 et la culasse 17. L'ailette 208 est destinée à être rabattue de manière à être maintenue repliée par un rebord avant d'un isolant 20 adjacent pour constituer un mur électriquement isolant entre deux bobines adjacentes 19. Les rebords 203, 204 et le cadre 202 du corps 201 d'une bobine 19 définissent une gorge pour l'enroulement du fil de la bobine 19 qui pourra être de section ronde ou en variante de section rectangulaire, carrée ou en forme de méplat. Ce fil de bobine présente deux extrémités 191, 192 situées globalement sur une même circonférence du côté d'une extrémité libre d'une dent 14- le plus éloigné de la culasse 17, comme visible à la figure 2b. Une première extrémité 191 d'une bobine 19, appelée « extrémité d'entrée » est destinée à être connectée avec les autres entrés 191 de manière alternée pour appartenir à l'une des phases U, V, W de la machine électrique polyphasée, qui pourra être du type triphasée. Une deuxième extrémité 192 de cette bobine 19 appelée « extrémité de sortie » est destinée à être reliée au neutre du bobinage du stator 11.

Chaque rebord 203, 204 présente deux bordures longitudinales d'orientation axiale et deux bordures d'orientation transversale de plus petite longueur que les bordures longitudinales.

Les bordures longitudinales du bord avant 203 sont configurées à une de leur extrémité 213 pour servir de guide fil pour chaque extrémité 191, 192 de la bobine 19. Le cadre 202 est destiné à être enfilé avec sa bobine 19 sur une dent 14 globalement de section rectangulaire complémentaire à celle de la périphérie interne du cadre 202. Les faces internes des parois inférieure et supérieure du cadre 202 de l'isolant 20 présentent des rainures borgnes 211 non débouchantes au niveau du côté interne de la machine électrique pour fixer le cadre 202 et la bobine 19 sur une dent 14 à l'aide d'un vernis d'imprégnation, par exemple à base de résine époxy, de résine polyester non saturée ou de résine silicone. Bien entendu on peut rajouter des accélérateurs pour réduire la durée d'imprégnation, la résine introduite à l'état liquide dans les rainures 211 se polymérisant. On notera que les rainures 211 ne sont pas masquées par la culasse 17.

Les bobines 19 sont interconnectées entre elles pour former les différentes phases de la machine électrique polyphasée, à l'aide d'un interconnecteur 22 d'axe X1 confondu avec l'axe X lorsque le connecteur est installé sur le stator 11. Pour ce faire l'interconnecteur comporte au moins quatre conducteurs électriques de forme annulaire par exemple circulaires 31-34 empilées axialement les uns sur les autres et isolées entre eux.

Chaque conducteur circulaire 31-34 porte à sa périphérie interne des pattes 36 électriquement conductrices s'étendant en saillie vers l'intérieur pour le soudage des extrémités 191, 192 des bobines 19.

Le nombre de bobines 19 pourra être égal à 15 pour obtenir une bonne puissance de la machine électrique tout en ayant un stator compact, chaque phase U, V, W du bobinage triphasé comportant cinq pattes 36. Bien entendu cela dépend des applications, le nombre de bobines 19 pourra être différent de 15 sachant que la machine pourra comporter plus de trois phases. Un 31 des conducteurs circulaires, dit conducteur circulaire de neutre, est destiné à être relié au neutre du bobinage du stator 11 de la machine comme visible par exemple à la figure 1 du document EP 0 831 580 précité, tandis que trois des autres conducteurs circulaires 32-34, dits conducteurs circulaires de phase, sont destinés à être reliés chacun à une phase de la machine. Le conducteur circulaire de neutre 31 comporte donc 15 pattes dans ce mode de réalisation à 5 bobines 19 par phase.

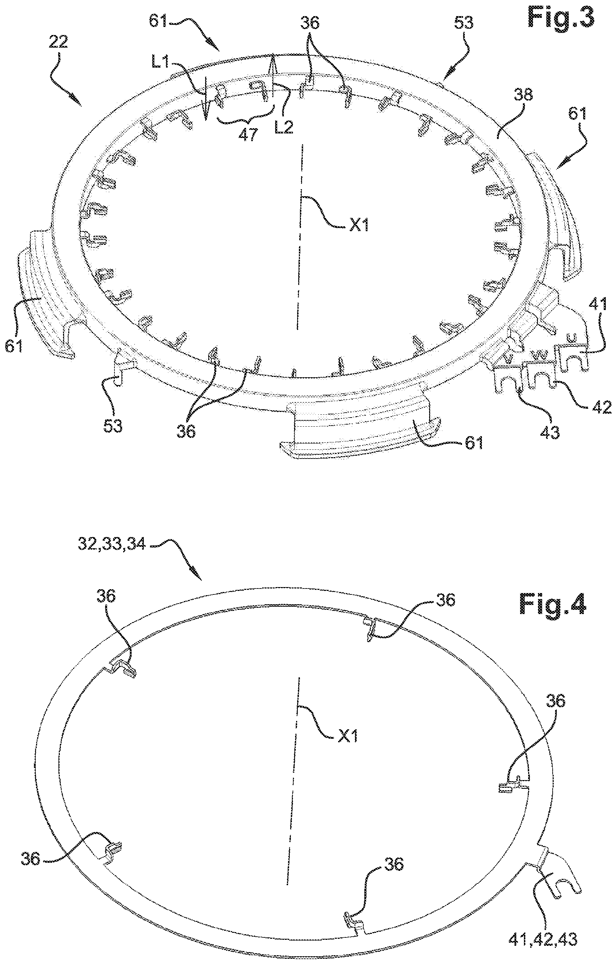

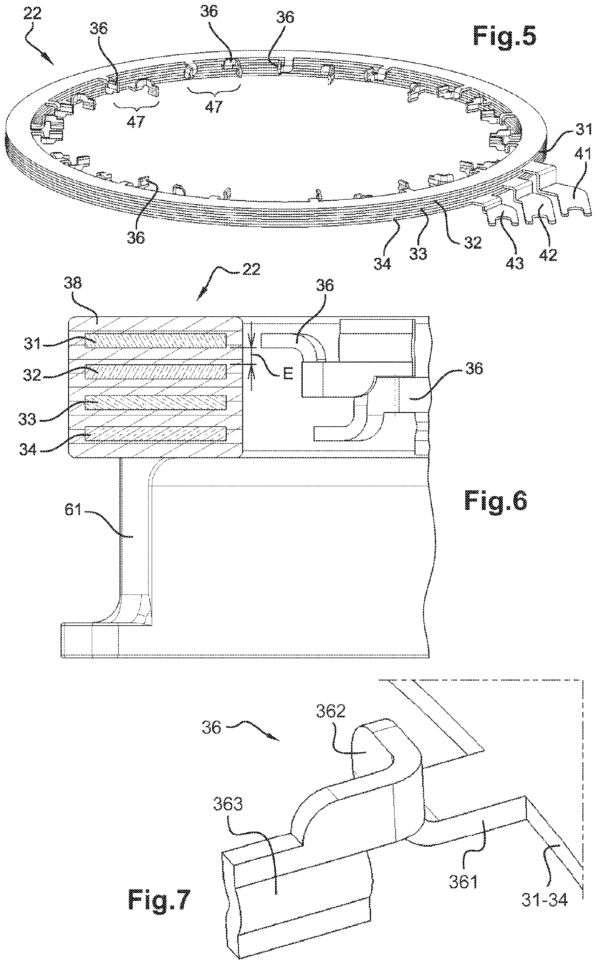

Un ensemble 47 (Figures 3 et 5) formé par une patte 36 d'un conducteur circulaire de neutre 31 et d'une patte 36 d'un conducteur circulaire de phase 32-34 est implanté de manière à être positionné entre les côtés d'une bobine 19 du stator 11 comme visible par exemple à la figure 2a. Les extrémités 191, 192 de l'ensemble 47 sont décalées l'une vers l'autre. Tout cela est réalisé pour avoir suffisamment de place pour pincer une patte 36 et une extrémité 191, 192 d'une bobine 19 à l'aide d'une électrode de soudage. Pour ce faire les conducteurs circulaires 31-34 sont électriquement conducteurs en étant par exemple en cuivre ou en un autre matériau métallique soudable.

Les conducteurs circulaires 31-34 sont globalement de forme annulaire et sont noyées dans un corps 38 réalisé en matériau électriquement isolant, tel que de la matière plastique par exemple du P A 6.6 avantageusement renforcé par des fibres, telles que des fibres de verre. Comme visible par exemple à la figure 6, une épaisseur E, par exemple de 1, 6 mm, étant présente entre les conducteurs circulaires.

Le diamètre externe du connecteur 22 correspond globalement au diamètre externe des conducteurs circulaires 31-34. Ce diamètre externe est inférieur au diamètre externe de la culasse 17. Par exemple le diamètre externe des conducteurs circulaires est de l'ordre de 218,5 mm, tandis que le diamètre interne des conducteurs circulaires est de l'ordre de 198,5 mm, ce diamètre interne étant supérieur à celui de la périphérie interne des dents 14. Les extrémités 191, 192 d'orientation axiale des bobines 19, sont implantées sur une circonférence, d'une part, au moins égale, ici supérieure, à celle de la périphérie interne des dents 14 et d'autre part, inférieure au diamètre interne des conducteurs circulaires 31-34 et donc du connecteur 22. Chaque patte 36, comme visible à la figure 7, comporte une portion en forme de L dotée d'un premier bras 361 issu de la périphérie interne d'un conducteur circulaire 31-34 et qui s'étend vers l'intérieur et un deuxième bras 362 perpendiculaire au premier bras 361. L'extrémité libre de la patte 36 présente une tête 363 reliée à un des bords du deuxième bras 362. La tête présente une forme bombée creuse adaptée à la section du fil conducteur pour le soudage de l'extrémité concernée 191, 192 d'une bobine 19. La partie creuse de la tête 363 s'étend globalement perpendiculairement au premier bras 361. Les pattes 36 du conducteurs circulaires de neutre 31 sont dirigée, suivant une direction axiale, en sens inverse par rapport aux pattes 36 des conducteurs circulaires 32-34 des phases de sorte que toutes les pattes 36 de l'interconnecteur 22 se situent globalement à la même hauteur que les extrémités 191, 192 des bobines 19. Plus précisément comme visible à la figure 3 les pattes 36 du conducteurs circulaires 31 sont dirigées suivant la direction axiale Ll, tandis que les pattes 36 des conducteurs circulaires 32-34 sont dirigées suivant la direction axiale opposée L2.

Chaque conducteurs circulaires de phase 32-34 comporte à sa périphérie externe un terminal de connexion 41-43 pour la connexion avec un connecteur de puissance, lui-même relié au pont redresseur d'un alternateur ou un onduleur, tel celui des documents EP 0 831 580 et FR 2 745 444. Ces terminaux 41-43 sont placés côte à côte et présentent une extrémité par exemple en forme de U. Ces terminaux 41-43 sont rigides et de faible encombrement. L'interconnecteur 22 comporte par ailleurs des pions d'indexage 53 pour ajuster le montage de l'interconnecteur 22 par rapport à la culasse 17 du stator 11. Ces pions 53 sont d'orientation axiale comportent une tige destinée à être insérée entre à coopérer chacune avec un système de guidage porté par un isolant de bobine 19 associé comme visible à la figure 8. Pour ce faire l'isolant présente deux protubérance 54 entre lesquelles pénètre la tige 53.

Ce connecteur 22 présente des pieds d'appui 61, ici au nombre de quatre, assurant un positionnement du corps isolant 38de l'interconnecteur au-dessus des bobines 19 sans les toucher. Ces pieds sont implantés à la périphérie externe du corps 38 comme visible à la figure 3. Les pieds d'appui 61 présentent une forme en L avec une extrémité de fixation issue de la périphérie externe du corps 38 et une extrémité terminée par un support 62 destiné à venir en appui sur le rebord concerné de la culasse 17. Le support 62 comporte par exemple des trous pour sa fixation, par exemple par vissage, rivetage ou à l'aide de tirants à la culasse.

Ce type de connecteur donne satisfaction. Néanmoins l' ensemble 47 d'une même bobine 19 formé par une patte 36 d'un conducteur circulaire de neutre 31 et d'une patte 36 d'un conducteur circulaire de phase 32-34 peut ne pas être écarté circonférentiellement autant que désiré ce qui peut ne pas faciliter les opérations de soudage en gênant le passage des électrodes de soudage des extrémités 191, 192 des bobines 19 aux pattes 36.

Il est donc souhaitable de faciliter les opérations de soudage des extrémités 191, 192 des bobines 19.

### Objet de l'invention

La présente invention a pour objet de répondre de manière simple et économique à ce souhait.

Ainsi suivant l'invention un interconnecteur à conducteurs circulaires pour stator de machine électrique tournante polyphasée comprenant un corps de stator portant un bobinage doté de plusieurs bobines présentant chacune des extrémités d'entrée et de sortie et l'interconnecteur comporte une première partie comprenant au moins trois conducteurs circulaires de forme annulaire empilés axialement les uns sur les autres et isolés électriquement entre eux et une deuxième partie comprenant au moins un conducteur de forme annulaire isolé électriquement, les dites première et seconde parties étant destinées à être implantées de part et d'autre du corps du stator, caractérisé en ce que les conducteurs circulaires de la première partie et le conducteur circulaire de la seconde partie portent à leur périphérie interne des pattes s'étendant en saillie vers l'intérieur pour soudage respectivement des extrémités d'entrée et des extrémités de sortie des bobines et la première partie de l'interconnecteur présente des pieds d'appui en forme de L à reposer sur un rebord d'une culasse que présente le corps du stator.

Suivant l'invention un stator de machines électrique tournante équipé de bobines est caractérisé en ce qu'il comporte un tel interconnecteur.

Grâce à l'invention on répartie les entrées et les sorties des bobines de part et d'autre du corps du stator ce qui laisse plus de place et d'espace pour les opérations de soudage. On peut donc pincer les extrémités 191, 192 et les pattes à l'aide d'électrodes de soudage sans interférence. En outre on ne modifie pas de manière profonde l'interconnecteur de la demande précitée car on diminue le nombre de conducteurs circulaires de celui-ci tout en ayant la possibilité de conserver la structure de celui-ci. On rajoute au moins un conducteur circulaire de l'autre côté du corps du stator de la machine électrique. Ce conducteurs circulaires pourra comporter des pieds ou en être dépourvu.

De plus on peut augmenter aisément le nombre de phases de la machine et envisager des montages en triangle ou en étoile des bobines. Dans le cas de montage en étoile la deuxième partie du connecteur présente plusieurs conducteurs circulaires avec des terminaux de connexion. Cette deuxième partie pourra comporter des pions d'indexage destinées à coopérer avec des systèmes de guidage, tels que des protubérances, portés par les isolants de bobine. On peut standardiser les isolants de bobines et doter ceux-ci à chacune de leurs extrémités axiales de creusures de guidage de réception d'une extrémité de bobine et de protubérances de réception d'un pion d'indexage de l'interconnecteur.

Certes on aurait pu faire déborder vers l'intérieur du rotor le conducteur circulaire de la deuxième partie du connecteur, tel qu'un conducteur circulaire de neutre, mais cela entraîne un montage axial du rotor dans le stator dans un seul sens. Grâce à l'invention on peut monter axialement dans les deux sens le rotor dans le stator.

Suivant d'autres caractéristiques prises isolément ou en combinaison :
- la deuxième partie de l'interconnecteur présente un conducteur circulaire de neutre pour montage en étoile des bobines ;
- la deuxième partie de l'interconnecteur comporte deux conducteurs circulaires de neutre pour montage en parallèle de deux bobinage en étoile des bobines ;
- la première partie de l'interconnecteur comporte six conducteurs circulaires;
- la deuxième partie de l'interconnecteur présente un nombre de conducteurs circulaires égal à celui de la première partie de l'interconnecteur pour montage en étoile des bobines ;
- la première et la deuxième partie de l'interconnecteur ont des formes similaires ;
- le nombre de bobines du stator est inférieur ou supérieur à 15 :
- le stator porte cinq bobines par phases de la machine électrique ;
- le stator porte quatre bobines par phase de la machine :
- les extrémités d'entrée et de sortie des bobines sont implantées respectivement à l'une et à l'autre des extrémités axiales des bobines ;
- les extrémités des bobines sont implantées de part et d'autre du corps du stator ;
- les extrémités des bobines sont implantées sur une circonférence de diamètre au moins égal à celui de la périphérie interne des dents du stator pour ne pas interférer avec le rotor de la machine électrique ;
- la machine électrique est un alternateur ;
- la machine électrique est un alterno-démarreur ;
- la machine électrique est un moteur électrique ;
- la machine électrique est un prolongateur d'autonomie d'un véhicule électrique ;
- la machine électrique présente un pont redresseur de tension ou un onduleur porté par le carter de celle-ci.
- l'interconnecteur est fixé à au moins un isolant de bobine.
- l'interconnecteur est fixé à au moins trois isolants.
- l'interconnecteur comprend au moins un clip coopérant avec une ouverture disposée sur un rebord arrière de l'isolant.
- les bobines sont couplées en triangle.

D'autres avantages apparaîtront à la lecture de la description qui va suivre de manière non limitative et ce en regard des dessins annexés

### Brève description des dessins

- la figure 1 précitée, montre un isolant de bobine selon l'art antérieur destiné à être monté autour d'une dent du stator ;
- les figures 2a et 2b précitées sont des vues en perspective respectivement d'un stator seul et d'un stator bobiné muni d'un interconnecteur selon l'art antérieur, à savoir la demande FR 12/55770 ;
- la figure 3 est une vue de dessus de l'interconnecteur ;
- la figure 5 représente une vue en perspective de l'un des conducteurs circulaires de l'interconnecteur selon l'art antérieur.
- les figures 5 et 6 sont des vues respectivement en perspective et en coupe transversale des conducteurs circulaires de l'empilement de l'interconnecteur selon l'art antérieur ;
- la figure 7 représente une vue en perspective détaillée d'une patte d'interconnexion de l' interconnecteur.
- la figure 8 est une vue de détail en perspective montrant un pion d'indexage de l'interconnecteur avec un système de guidage de l'isolant de bobine ;
- la figure 9 est une vue en perspective d'un isolant de bobine

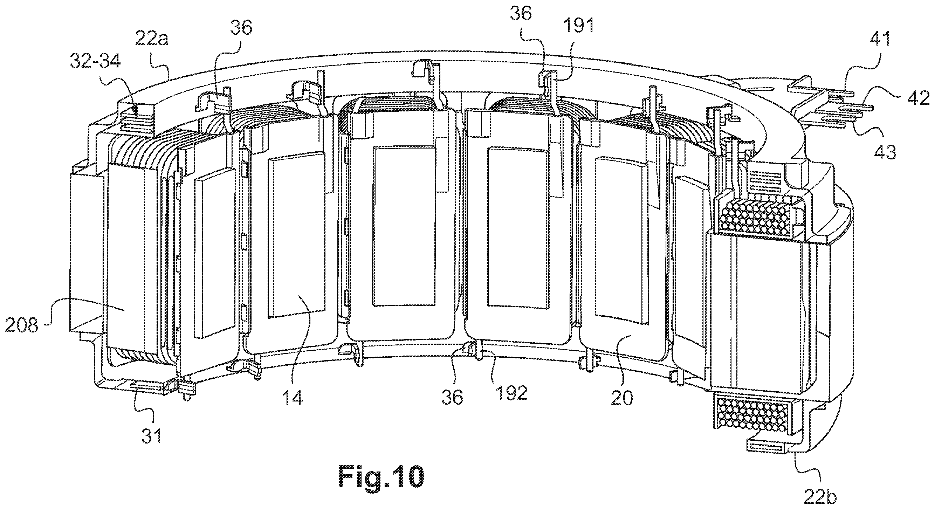

- la figure 10 est une vue partielle en perspective, analogue à la figure 2b, d'un stator bobiné muni d'un interconnecteur en deux parties selon l'invention.

Dans les figures les éléments identiques ou similaires seront affectés des mêmes signes de référence.

### Descriptions d'exemples de réalisation de l'invention

Dans la description les éléments communs ou similaires à ceux de la demande FR2992495 seront affectés des mêmes signes de références, pour plus de précision, on se rapportera à la demande FR2992495.

Dans les exemples de réalisation selon l'invention l'interconnecteur comporte des conducteurs circulaires à pattes comme dans cette demande précitée. Le stator de la machine électrique pourra comporter comme dans les figures précédentes un corps de stator 12 présentant une culasse 17 et des dents 14 séparées par des encoches 15 comme à la figure 2a. Ce stator 11 porte des bobines 19 à extrémités d'entrée 191 et extrémités de sortie 192. Ces bobines 19 comportent un fil conducteur enroulé sur un isolant d'encoche 20 comme dans les figures 2a à 2b, la section du fil étant ronde, rectangulaire, carrée ou autre. Les bobines 19 sont montées sur les dents 14 via leur isolant 20 comme dans les figures précédentes. L'isolant 20 des figures 2a à 9 pourra globalement être conservé. La modification de cet isolant porte sur le fait qu'il est configuré pour que les entrées 191 et les sorties 192 des bobines soient implantées respectivement à l'une et à l'autre des extrémités axiales des bobines 19 et ce sur une circonférence au moins égale à celle de la périphérie interne des dents 14. Ces extrémités 191, 192 sont donc implantées axialement de part et d'autre du corps 12 du stator 11.

Ainsi suivant l'invention un interconnecteur à conducteurs circulaires 31-34 pour stator de machine électrique tournante polyphasée comprenant un corps 12 de stator 11 portant un bobinage doté de plusieurs bobines 19 présentant chacune des extrémités d'entrée 191 et de sortie 192 est caractérisé en ce qu'il comporte une première partie 22a comprenant au moins trois conducteurs circulaires 32-34 de forme annulaire empilés axialement les uns sur les autres et isolés électriquement entre eux et une deuxième partie 22b comprenant au moins un conducteur circulaire 31 de forme annulaire isolé électriquement, les dites première et seconde partie étant destinées à être implantée de part et d'autre du corps 12du stator et en ce que les conducteurs circulaires 32-34 de la première partie 22a et le conducteur circulaire 31 de la seconde partie 22b portent à leur périphérie interne des pattes 36 s'étendant en saillie vers l'intérieur pour soudage respectivement des extrémités d'entrée et des extrémités de sortie des bobines.

La première partie 22a pourra comporter, comme dans les figures 2a d'appui destinés à reposer sur l'un des rebords de la culasse 17. Cette première partie 22a pourra comporter des pions d'indexage à comme dans les figures 2a à 9.

Ces pions d'indexage pourront coopérer avec des moyens de guidage, tels que des protubérances, appartenant à des isolants 20 de bobines comme dans les figures 2a à 9.

Ce qui vient d'être dit s'applique à la deuxième partie 22b de l'interconnecteur pouvant être ainsi dotée de pieds d'appui et de pions d'indexage.

On pourra standardiser les isolants de bobines et doter ceux-ci à chacune de leurs extrémités axiales de creusures de guidage de réception d'une extrémité de bobine et de protubérances de réception d'un pion d'indexage de l'interconnecteur.
S

D'une manière générale on conserve globalement la structure des isolants d'encoche et leur montage sur les dents. Ainsi on pourra procéder à la fixation des isolants par imprégnation comme dans la demande précitée avant ou après le soudage des pattes 36 sur les extrémités 191, 192.

On a suffisamment de place pour effectuer les soudures des extrémités 191, 192 sur les pattes 36 puisque l'interconnecteur est scindé en deux parties dédiées chacune à l'une des extrémités 191, 192 des bobines, ces deux partie étant disposées de part et d'autre du corps du stator. en outre les extrémités 191, 192 des bobines sont implantées sur une circonférence de diamètre au moins égale à celui de la périphérie interne du corps 12 du stator définie par la périphérie interne des dents 14. Lors du montage du rotor dans le stator axialement dans un sens ou dans l'autre aucune interférence n'est donc à craindre.

On peut implanter la première partie 22a du côté avant du corps du stator et la deuxième partie 22b du côté arrière du corps 12. L'inverse est possible.

On ne modifie pas de manière profonde l'interconnecteur des figures 2a à 9, cet interconnecteur correspondant à la première partie 22 de l'interconnecteur selon l'invention avec un conducteur circulaire en moins, les conducteurs circulaires de la première partie 22a ainsi que le conducteur circulaire de la deuxième partie 22b étant noyés dans de la matière électriquement isolante, tel que de la matière plastique. On conserve la structure des pattes 36 visible notamment à la figure 7.

En outre on peut augmenter aisément le nombre de phases de la machine, la première partie 22a pouvant comporter plus de trois conducteurs circulaires.

### Premier mode de réalisation

Dans cette réalisation (Figure 10) le cadre 31 de la deuxième partie 22b est un conducteur circulaire de neutre pour le montage en étoile des bobines 19 ici au nombre de 15 comme dans les figures 2a à 2b. Cette deuxième partie pourra être dotée de pieds d'appui sur le bord concerné de la culasse. En variante cette deuxième partie est dépourvue de pieds d'appui. Le conducteur circulaire 31 est noyé dans une matière électriquement isolante telle que de la matière plastique par exemple du P A 6.6 qui pourra être renforcé par des fibres.

La première partie 22a présente trois conducteurs circulaires au lieu de 4 noyés dans de la matière plastique comme à la figure 6. On voit en 41, 42, 43 les terminaux de ces conducteurs circulaires identiques à ceux des figures 2a à 9. Cette première partie pourra de manière précitée comporter des pieds d'appui sur l'autre bord de la culasse.

On notera que l'encombrement axial de l'interconnecteur est globalement égal à celui des figures 2a à 9 car on transfert un conducteur circulaire d'une extrémité du corps 12 à l'autre extrémité de ce corps 12.

### Deuxième mode de réalisation

Dans ce deuxième mode de réalisation la deuxième partie 22b comporte un nombre de conducteurs circulaires égal à celui de la première partie 22a pour un montage en triangle des bobines.

La première et la deuxième partie de l'interconnecteur pourront donc comporter au moins trois conducteurs circulaires avec des terminaux pour raccordement à la partie électronique de la machine électrique par exemple via deux câbles.

### Autres formes de réalisations

La deuxième partie de l'interconnecteur pourra comporter deux conducteurs circulaires de neutre et la première partie de l'interconnecteur six conducteurs circulaires pour montage en parallèle de deux bobinages en étoile.

Le nombre de phases de la machine pourra être supérieur à 3, par exemple de 4, 5 ou 6 phases. Le nombre de bobines 19 et de dent 14 pourra être inférieur ou supérieur à 15 selon la puissance désirée et le nombre de phases souhaitées.

L'isolant d'encoche 20 pourra être dépourvu de talon 207 et/ ou d'ailette 208.

L'isolant 20 pourra être en deux parties axiales ou transversales assemblées entre elles par exemple par encliquetage.

Le cadre 202 de l'isolant 20 pourra présenter longitudinalement de chaque côté une fenêtre de montage d'un isolant de faible épaisseur en contact avec la dent 14 concernée pour une meilleure évacuation des calories.

Pour garantir un maintien efficace de la bobine 19 sur sa dent 14 lors de l'injection du vernis on peut prévoir des ergots d'accrochage sur l'isolant 20 coopérant avec des piqures réalisées dans la dent comme à la figure 8 de la demande FR2995834 déposée le 25/9/2012.

Comme visible dans cette demande au moyen d'un système d'encliquetage avec la bordure longitudinale du rebord avant 203.

Les dents 14 pourront être rapportées sur la culasse 17 par une liaison du type tenon -mortaise. Dans ce cas on pourra monter par avance la bobine 19 sur sa dent 14 et les encoches 15 pourront être du type semi-fermé, les dents 14 présentant alors des pieds.

On pourra implanter un capteur de température dans l'une des bobines 19 pour couper la machine électrique en cas de surchauffe.

Toutes ces formes de réalisation sont à considérer isolément ou en combinaison.

### Applications

L'interconnecteur selon l'invention pourra faire partie d'un stator d'une machine électrique tournante consistant de manière précitée en un alternateur, ou en un alterno-démarreur, ou en un moteur électrique ou en un ralentisseur électromagnétique.

L'alternateur pourra appartenir à un prolongateur d'autonomie d'un véhicule électrique, cet alternateur étant associé à un moteur thermique pour former avec celui-ci un groupe électrogène pour recharger les batteries du véhicule électrique. Dans ce cas l'alternateur pourra être entraîné en rotation par l'arbre de sortie du moteur thermique.

L'alterno-démarreur ou l'alternateur pourront être entrainés par le moteur thermique du véhicule via une transmission de mouvement qui pourra comporter au moins une courroie et une poulie solidaire de l'arbre du rotor.

L'alterno-démarreur ou l'alternateur pourront être associés à au moins un embrayage intercalé entre le moteur thermique et la boîte de vitesse du véhicule automobile comme décrit par exemple dans le document FR 2 830 589 et dans la demande FR2995834 A déposé le 25/09/2012 auxquels on se reportera pour plus de précisions..

Le rotor de la machine électrique pourra de manière précitée être un rotor à griffes, un rotor à pôles saillants ou un rotor à aimants permanents. Les aimants permanents pourront être implantés radialement ou circonférentiellement ou de manière inclinée comme décrit dans la demande FR2995834 A précitée décrivant également un tuyau pour le refroidissement de la machine électrique.

Le rotor à griffes et le rotor à pôles saillants pourront être dotés également d'aimants permanents de manière précitée.

Dans tous les cas grâce aux dispositions selon l'invention on peut monter le rotor dans le stator axialement dans les deux sens.

Les termes conducteurs ou conducteurs électriques ou traces électriques sont utilisés invariablement et sont synonymes dans l'ensemble de la description.

## Revendications

1. Interconnecteur à conducteurs de forme annulaire (31-34) pour stator de machine électrique tournante polyphasée comprenant un corps (12) de stator (11) portant un bobinage doté de plusieurs bobines (19) présentant chacune des extrémités d'entrée (191) et de sortie (192), l'interconnecteur comportant une première partie (22a) comprenant au moins trois conducteurs (32-34) de forme annulaire empilés axialement les uns sur les autres et isolés électriquement entre eux et une deuxième partie (22b) comprenant au moins un conducteur (31) de forme annulaire isolé électriquement, les dites première et seconde parties étant destinées à être implantées de part et d'autre du corps (12) du stator, **caractérisé en ce que** les conducteurs de forme annulaire (32-34) de la première partie (22a) et le conducteur de forme annulaire (31) de la seconde partie (22b) portent à leur périphérie interne des pattes (36) s'étendant en saillie vers l'intérieur pour soudage respectivement des extrémités d'entrée (191) et des extrémités de sortie (192) des bobines et **en ce que** la première partie (22a) de l'interconnecteur présente des pieds d'appui (61) en forme de L destinés à reposer sur un rebord d'une culasse (17) que présente le corps (12) du stator.

2. Interconnecteur selon la revendication 1, **caractérisé en ce que** le conducteur (31) de la deuxième partie (22b) est un conducteur de neutre pour couplage électrique en étoile de bobines (19).

3. Interconnecteur selon la revendication 1, **caractérisé en ce que** la deuxième partie (22b) de l'interconnecteur comporte deux conducteurs de neutre pour couplage électrique en parallèle de deux bobinages en étoile des bobines.

4. Interconnecteur selon l'une quelconque des revendications précédentes, **caractérisé en ce que** la première partie (22a) de l'interconnecteur comporte plus de trois conducteurs.

5. Interconnecteur selon la revendication 1 ou 4, **caractérisé en ce que** la deuxième partie (22b) de l'interconnecteur présente un nombre de conducteurs égal à celui de la première partie (22a) de l'interconnecteur pour couplage électrique en étoile des bobines.

6. Interconnecteur selon la revendication 1, **caractérisé en ce que** la deuxième partie (22b) de l'interconnecteur présente des pieds d'appui en forme de L destinés à reposer sur l'autre rebord d'une culasse (17) que présente le corps (12) du stator.

7. Interconnecteur selon l'une des revendications 1 à 5 **caractérisé en ce qu'**il est fixé à au moins un isolant de bobine.

8. Interconnecteur selon la revendication 7 **caractérisé en ce qu'**il est fixé à au moins trois isolants.

9. Interconnecteur selon la revendication 7 ou 8, **caractérisé en ce qu'**il comprend au moins un clip coopérant avec une ouverture disposée sur un rebord arrière de l'isolant.

10. Interconnecteur selon l'une quelconque des revendications 1, 4, ou 6, dans lequel les bobines sont couplées en triangle.

11. Stator (11) de machine électrique tournante comprenant un corps (12) de stator (11) portant un bobinage doté de plusieurs bobines (19) présentant chacune des extrémités d'entrée (191) et de sortie (192), le stator étant muni d'un interconnecteur (22a, 22b) selon l'un des revendications précédentes, **caractérisé en ce que** lesdites extrémités (191, 192) sont reliées à l'interconnecteur (22a,22b).

12. Stator selon la revendication 11, **caractérisé en ce que** les extrémités d'entrée (191) et de sortie (192) des bobines (19) sont implantées respectivement à l'une et à l'autre des extrémités axiales des bobines.

13. Stator selon la revendication 11 ou 12 **caractérisé en ce que** les extrémités (191, 192) des bobines sont implantées de part et d'autre du corps (12) du stator.

14. Stator selon l'une quelconque des 11 à 13, **caractérisé en ce que** les extrémités (191, 192) des bobines (19) sont implantées sur une circonférence au moins égale à celui de la périphérie interne du corps (12) du stator.

## Patentansprüche

1. Verbinder mit ringförmigen Leitern (31-34) für einen Stator einer mehrphasigen rotierenden elektrischen Maschine, welcher einen Körper (12) des Stators (11) umfasst, der eine Wicklung mit mehreren Spulen (19) trägt, die jeweils ein Eingangs- (191) und ein Ausgangsende (192) aufweisen, wobei der Verbinder einen ersten Teil (22a), der mindestens drei axial übereinander gestapelte und elektrisch voneinander isolierte ringförmige Leiter (32-34) umfasst, und einen zweiten Teil (22b), der mindestens einen elektrisch isolierten ringförmigen Leiter (31) umfasst, aufweist, wobei der erste und der zweite Teil dazu bestimmt sind, beiderseits des Körper (12) des Stators angeordnet zu werden,
**dadurch gekennzeichnet, dass** die ringförmigen Leiter (32-34) des ersten Teils (22a) und der ringförmige Leiter (31) des zweiten Teils (22b) an ihrem Innenumfang Laschen (36) tragen, die sich nach innen vorstehend erstrecken, zum Anschweißen der Eingangsenden (191) bzw. der Ausgangsenden (192) der Spulen, und dadurch, dass der erste Teil (22a) des Verbinders L-förmige Stützfüße (61) aufweist, die dazu bestimmt sind, auf einem Rand eines Jochgestells (17) aufzuliegen, welches der Körper (12) des Stators aufweist.

2. Verbinder nach Anspruch 1, **dadurch gekennzeichnet, dass** der Leiter (31) des zweiten Teils (22b) ein Neutralleiter für eine elektrische Sternschaltung von Spulen (19) ist.

3. Verbinder nach Anspruch 1, **dadurch gekennzeichnet, dass** der zweite Teil (22b) des Verbinders zwei Neutralleiter für eine elektrische Parallelschaltung von zwei Sternwicklungen der Spulen aufweist.

4. Verbinder nach einem der vorhergehenden Ansprüche, **dadurch gekennzeichnet, dass** der erste Teil (22a) des Verbinders mehr als drei Leiter aufweist.

5. Verbinder nach Anspruch 1 oder 4, **dadurch gekennzeichnet, dass** der zweite Teil (22b) des Verbinders eine Anzahl von Leitern aufweist, die gleich derjenigen des ersten Teils (22a) des Verbinders für eine elektrische Sternschaltung der Spulen ist.

6. Verbinder nach Anspruch 1, **dadurch gekennzeichnet, dass** der zweite Teil (22b) des Verbinders L-förmige Stützfüße aufweist, die dazu bestimmt sind, auf dem anderen Rand eines Jochgestells (17) aufzuliegen, welches der Körper (12) des Stators aufweist.

7. Verbinder nach einem der Ansprüche 1 bis 5, **dadurch gekennzeichnet, dass** er an mindestens einer Spulenisolierung befestigt ist.

8. Verbinder nach Anspruch 7, **dadurch gekennzeichnet, dass** er an mindestens drei Isolierungen befestigt ist.

9. Verbinder nach Anspruch 7 oder 8, **dadurch gekennzeichnet, dass** er mindestens einen Clip umfasst, der mit einer Öffnung zusammenwirkt, die an einem hinteren Rand der Isolierung angeordnet ist.

10. Verbinder nach einem der Ansprüche 1, 4 oder 6, wobei die Spulen in Dreieck geschaltet sind.

11. Stator (11) einer rotierenden elektrischen Maschine, welcher einen Körper (12) des Stators (11) umfasst, der eine Wicklung mit mehreren Spulen (19) trägt, die jeweils ein Eingangs- (191) und ein Ausgangsende (192) aufweisen, wobei der Stator mit einem Verbinder (22a, 22b) nach einem der vorhergehenden Ansprüche ausgestattet ist, **dadurch gekennzeichnet, dass** die Enden (191, 192) mit dem Verbinder (22a, 22b) verbunden sind.

12. Stator nach Anspruch 11, **dadurch gekennzeichnet, dass** die Eingangs- (191) und ein Ausgangsenden (192) der Spulen (19) am einen bzw. am anderen der axialen Enden der Spulen angeordnet sind.

13. Stator nach Anspruch 11 oder 12, **dadurch gekennzeichnet, dass** die Enden (191, 192) der Spulen beiderseits des Körpers (12) des Stators angeordnet sind.

14. Stator nach einem der Ansprüche 11 bis 13, **dadurch gekennzeichnet, dass** die Enden (191, 192) der Spulen (19) auf einer Umfangslänge angeordnet sind, die mindestens gleich derjenigen des Innenumfangs des Körpers (12) des Stators ist.

## Claims

1. Interconnector with conductors of annular shape (31-34) for a stator of a polyphase rotary electric machine, comprising a body (12) of the stator (11) bearing a winding equipped with a plurality of coils (19) each having input (191) and output (192) ends, the interconnector having a first part (22a) comprising at least three conductors (32-34) of annular shape that are stacked axially above one another and are electrically insulated from one another, and a second part (22b) comprising at least one electrically insulated conductor (31) of annular shape, said first and second parts being intended to be fitted on either side of the body (12) of the stator, **characterized in that** the conductors of annular shape (32-34) of the first part (22a) and the conductor of annular shape (31) of the second part (22b) bear, at their internal periphery, tabs (36) protruding towards the interior for respectively welding the input ends (191) and the output ends (192) of the coils, and **in that** the first part (22a) of the interconnector has L-shaped support legs (61) that are intended to rest on a rim of a yoke (17) comprised by the body (12) of the stator.

2. Interconnector according to Claim 1, **characterized in that** the conductor (31) of the second part (22b) is a neutral conductor for electrically coupling coils (19) in star configuration.

3. Interconnector according to Claim 1, **characterized in that** the second part (22b) of the interconnector has two neutral conductors for electrically coupling in parallel two coil windings that are in star configuration.

4. Interconnector according to any one of the preceding claims, **characterized in that** the first part (22a) of the interconnector has more than three conductors.

5. Interconnector according to Claim 1 or 4, **characterized in that** the second part (22b) of the interconnector has a number of conductors equal to that of the first part (22a) of the interconnector for electrically coupling the coils in star configuration.

6. Interconnector according to Claim 1, **characterized in that** the second part (22b) of the interconnector has L-shaped support legs that are intended to rest on the other rim of a yoke (17) comprised by the body (12) of the stator.

7. Interconnector according to one of Claims 1 to 5, **characterized in that** it is fixed to at least one coil insulator.

8. Interconnector according to Claim 7, **characterized in that** it is fixed to at least three insulators.

9. Interconnector according to Claim 7 or 8, **characterized in that** it comprises at least one clip cooperating with an opening disposed on a rear rim of the insulator.

10. Interconnector according to any one of Claims 1, 4 or 6, wherein the coils are coupled in delta configuration.

11. Stator (11) of a rotary electric machine, comprising a body (12) of the stator (11) bearing a winding equipped with a plurality of coils (19) each having input (191) and output (192) ends, the stator being provided with an interconnector (22a, 22b) according to one of the preceding claims, **characterized in that** said ends (191, 192) are connected to the interconnector (22a, 22b).

12. Stator according to Claim 11, **characterized in that** the input (191) and output (192) ends of the coils (19) are respectively fitted at the two axial ends of the coils.

13. Stator according to Claim 11 or 12, **characterized in that** the ends (191, 192) of the coils are fitted on either side of the body (12) of the stator.

14. Stator according to any one of Claims 11 to 13, **characterized in that** the ends (191, 192) of the coils (19) are fitted on a circumference at least equal to that of the internal periphery of the body (12) of the stator.
